# EUROPÄISCHE PATENTSCHRIFT

(11) **EP 0 630 729 B1**
(45) Veröffentlichungstag und Bekanntmachung des Hinweises auf die Patenterteilung: **27.09.2000**
(21) Anmeldenummer: 94107343.9
(22) Anmeldetag: 11.05.1994
(51) Int. Cl.: B29B 7/76

(54) **Vorrichtung zum Mischen flüssiger Medien**
Device for mixing liquid products
Dispositif pour mélanger des produits fluides

(30) Priorität: 18.06.1993 DE 4320121; 30.12.1993 DE 4344922
(43) Veröffentlichungstag der Anmeldung: 28.12.1994
(73) Patentinhaber: WILHELM HEDRICH VAKUUMANLAGEN GmbH & Co. KG, D-35630 Ehringshausen-Katzenfurt (DE)
(72) Erfinder: Häuser, Erhard, D-35641 Schöffengrund (DE)
(74) Vertreter: Müller, Eckhard, Dr.

(56) Entgegenhaltungen:
- EP-A- 0 009 118
- EP-A- 0 258 688
- BE-A- 895 216
- DE-A- 2 544 749
- FR-A- 1 244 249
- FR-A- 2 444 818
- US-A- 4 135 180
- PATENT ABSTRACTS OF JAPAN vol. 4, no. 92 (M-18)(574) 3. Juli 1980 & JP-A-55 049 213 (TOSHIBA)

## Beschreibung

Die Erfindung bezieht sich auf eine Vorrichtung gemäß dem Oberbegriff des Anspruches 1.

Eine solche Vorrichtung ist aus der EP-4-0 009 118 bekannt, wobei sowohl der Pump- als auch der Arbeitsraum je eine Dichtung aufweisen, so daß sowohl vom Antriebsraum her als auch vom Produktraum her die volle Druckdifferenz an der zugeordneten Dichtung anliegt. Der Raum zwischen den beiden Dichtungen des Kolbens mit des Zylinderwandung liegt auf Atomspharendruck. Gemäß dem Ausführungsbeispiel auf Seite 10 weisen die Arbeitsflächen des Kolbens ein Verhältnis von 2:1 auf. Demzufolge befindet sich an der Dichtung der Antriebsseite eine Druckdifferenz von 50 bar und an der Dichtung zum Produktraum hin eine Druckdifferenz von 2 x 50 bar =100 bar. Gerade beim Verarbeiten von abrassiven Medien sind die Dichtelemente wie auch der Kolbenmantel und die Zylinderinnenwandung einem hohen Verschleiß unterworfen, wodurch die Standzeit der Dichtelemente und der Kolben-Zylinder-Anordnung insgesamt erheblich verkürzt wird.

Aus der DE-A 34 20 222 ist eine Vorrichtung für die dosierte Abgabe von füllstoffhaltigen, gießfähigen Komponentenmassen bekannt, mit einem Pumpzylinder, in dem ein Kolben gleitend angeordnet ist. Der Kolben unterteilt den Zylinder in einen mit einem Vorratsbehälter für die Aufnahme von Komponentenmasse verbundenen Pumpenraum mit Einlaß- und Auslaßventil und einen mit einem Behälter für die Aufnahme einer den Kolben antreibenden Antriebsflüssigkeit verbundenen Arbeitsraum, wobei zwischen den beiden Zylinderräumen eine Spaltdichtung vorgesehen ist. Die Antriebsflüssigkeit ist so gewählt, daß sie mit der jeweiligen Komponentenmasse verträglich ist. Die mit der Antriebsflüssigkeit und der jeweiligen Komponentenmasse in Berührung kommenden Kolbenwirkflächen sind i. w. gleich groß, so daß auf beiden Seiten des Kolbens i. w. der gleiche Druck herrscht. Mit dieser Vorrichtung ist erreicht, daß auch füllstoffhaltige Komponentenmasse ohne schädliche, die Dosiermenge oder die Rezeptur bzw. die Funktion der Vorrichtung beeinträchtigende Leckagen, auch aus unter Vakuum stehenden Vorratsbehältern verarbeitet werden können. Die Abdichtung des Kolbens durch eine Spaltdichtung gewährleistet, daß der Pumpzylinder unempfindlich gegen im Gießharz enthaltene abrasive Füllstoffe ist. Auch ist es aus dieser Druckschrift bereits bekannt, wenigstens zwei Kolben, welche mit jeweils einer Komponentenmasse gefüllt werden, vorzusehen, deren Antrieb eine feste mechanische Kopplung in Form eines Balkens für die Kolben aufweist. Eine alternative Ausführungsform dieser Druckschrift beschreibt einen Stufenzylinder, in welchem ebenfalls zwei Zylinderräume für die Komponentenmasse gebildet sind. Diese bekannten Vorrichtungen dienen vornehmlich dem Zweck, den Dichtungsproblemen des oder der Pufferelemente, insbesondere im Hinblick auf abrasive Füllstoffe zu begegnen.

Aus der DE 42 08 769 A1 ist ebenfalls eine Vorrichtung zum Befüllen einer oder mehrerer Gießformen mit gießfähigen Stoffen bekannt, wobei die Einzelkomponenten in Vorratsbehältern bevorratet sind und an den Vorratsbehältern jeweils eine Pumpe vorgesehen ist. Um schnellhärtende Gießmassen verarbeiten zu können, deren Einzelkomponenten mit genau einzuhaltenden Mischungsverhältnissen zubereitet werden, ist es dort vorgesehen, daß die Pumpen mit mindestens einer Synchrondosiereinrichtung über mit Ventilen absperrbaren Leitungen verbunden sind und die Dosiereinrichtung aus mindestens zwei Dosierkammern besteht, in denen mechanisch miteinander verbundene Dosierkolben geführt sind. Die Synchrondosiereinrichtung ist über mit Ventilen absperrbaren Leitungen über einen Durchlaufmischer mit mindestens einer Gießmündung verbunden. Durch die bekannte Vorrichtung lassen sich die Mischungsverhältnisse gut einhalten. Die einzelnen Komponenten sind genau dosierbar, und es findet eine kontinuierliche Durchmischung in dem Mischer statt. Darüber hinaus ist es nach der DE-A-42 08 769 vorgesehen, im Hinblick auf schnellhärtende Gießmassen das Gießmassenvolumen im Misch- und Leitungsbereich zu minimieren. Diese bekannte Vorrichtung dient jedoch vornehmlich dazu, die Massezubereitung unmittelbar an die Gießform zu verlegen, um das zu reagierende Material in den Zuführungsleitungen und Elementen auf ein Minimum zu reduzieren.

Bei Gießharz mit hoher Viskosität und geringer Topfzeit besteht einerseits die Forderung nach kleinvolumigen Mischkammern, um eine Aushärtung des Materials in den Zuführungseinrichtungen zu vermeiden. Derartige kleinvolumige Mischkammern bedingen aber einen hohen Fließwiderstand, was eine entsprechende Pumpkraft zur Erreichung der vorgegebenen Fließrate erfordert.

Andererseits führt eine Heraufsetzung der ' Pumpkraft, insbesondere bei abrasiven Gießmassen zu einem hohen Verschleiß im Pumpenbereich. Darüber hinaus führen zu hohe Pumpkräfte zu einer größeren Dosierungsungenauigkeit der Pumpeinrichtung.

Davon ausgehend liegt der Erfindung die Aufgabe zugrunde, eine Vorrichtung der eingangs genannten Art dahingehend weiterzuentwickeln, daß insbesondere bei der Verarbeitung von abrasiven Gießmassen mit hoher Viskosität und geringer Topfzeit bei Vermeidung von Paßspaltdichtungen der Verschleiß der Abdichtungen erheblich reduziert ist.

Gelöst wird diese Aufgabe durch die Merkmale des Anspruches 1. Vorteilhafte Ausgestaltungen der Erfindung finden sich in den Unteransprüchen.

Durch die Erfindung ist erreicht, daß gerade bei hohen Drücken die Druckdifferenz an der jeweiligen Abdichtung zwischen Pumpraum und Antriebsraum bzw. dem Raum für das Zwischenfluid auf ein Minimum und damit auch der Verschleiß der Abdichtungen erheblich reduziert ist.

Unter Abdichtung im Sinne der Erfindung sind körperliche Dichtungen und keine Paßspaltdichtungen gemäß der DE-A-34 20 222 zu verstehen.

Nach der Erfindung kan eine einzählige Kolben-Zylinder-Anordnung mit zwei Zylinderräumen für die Einzelkomponenten der Gießmasse vorgesehen sein, Ebenso können wenigstens zwei separate Kolben-Zylinder-Anordnungen für die Einzelkomponenten der Gießmasse vorgesehen sein, welche mit einer gemeinsamen oder mehreren Mischkammern verbunden sind.

Die mindestens eine Kolben-Zylinder-Anordnung kann bspw. mittels einer mit der jeweiligen Einzelkomponente der Gießmasse verträglichen Antriebsflüssigkeit betrieben werden, wie dies bereits in der DE-A-34 20 222 beschrieben ist. Für die Regeleinrichtungen des Antriebsfluids kann jedoch eine solche mit den Einzelkomponenten der Gießmasse verträgliche Antriebsflüssigkeit u.U. eine zu hohe Viskosität aufweisen. Insoweit ist es nach der Erfindung vorgesehen, daß die mindestens eine Kolben-Zylinder-Anordnung einen durch Druckfluid beaufschlagbaren Antriebskolben und einen von dem Antriebskolben über ein Zwischenfluid antreibbaren Förderkolben für die jeweilige Einzelkomponente bzw. die Gießmasse aufweist, wobei das Zwischenfluid mit der jeweiligen Komponente verträglich ist. Durch den geometrischen Abstand zwischen Antriebsflüssigkeit und Einzelkomponente ist in jedem Fall sichergestellt, daß die Antriebsflüssigkeit nicht mit der Einzelkomponente in Berührung kommt und umgekehrt, so daß die Bauteile des Antriebsystemes nicht durch die Einzelkomponentenmassen verunreinigt werden. Bevorzugt erfolgt dabei der Antrieb der mindestens einen Kolben-Zylinder-Anordnung hydraulisch.

Dabei kann es sich nach der Erfindung empfehlen, daß der Förderkolben eine sich durch den Antriebskolben und durch den Zylinderdeckel oder der Antriebskolben eine sich durch den Zylinderdeckel erstreckende Kolbenstange zur Ermittlung des Speicherinhaltes an Komponentenmasse in der jeweiligen Kolben-Zylinder-Anordnung aufweist

Nach einer weiteren Ausführungsform der Erfindung ist es vorgesehen, daß die Kolbenelemente der wenigstens einen Kolben-Zylinder-Anordnung starr oder mit variabel vorwählbarem Kopplungsverhältnis miteinander gekoppelt sind. Mit einer starren Kopplung der Kolbenelemente lassen sich feste Rezepturen für die Gießmasse einhalten. Eine solche starre Kopplung kann bspw. durch eine Kolben-Zylinder-Anordnung mit stufenförmig ausgebildeten Kolben und zwei Zylinderräumen realisiert werden.

Eine weitere Möglichkeit besteht in der Anordnung von wenigstens zwei separaten Kolben-Zylinder-Anordnungen, deren Kolbenelemente fest miteinander gekoppelt sind, bspw. in Form eines die Kolbenelemente direkt oder deren Kolbenstangen verbindenden Balkens. Dagegen lassen sich mit einer variablen Kopplung mit vorwählbarem Kopplungsverhältnis unterschiedliche Rezepturen der Gießmasse fahren, ohne daß Umbauarbeiten an den Kolben-Zylinder-Anordnungen bzw. deren Antrieb vorgenommen werden müssen. Darüber hinaus kann der Antrieb für die Kolbenelemente der Kolben-Zylinder-Anordnungen auch für ein veränderbares Antriebsverhältnis der Kolbenelemente untereinander bzw. für ein veränderbares Mischungsverhältnis der Einzelkomponenten ausgebildet sein. Hierdurch kann bspw. die Einzelteilqualität variiert werden, um einen Teil des späteren Formlinges mit einer größeren Härte und einen anderen Teilabschnitt flexibler zu gestalten. Bspw. könnte die Zugabe von Flexibilisator während der Formfüllung variiert werden, etwa durch eine dritte Pumpeinrichtung mit zugeordnetem Vorratsbehälter.

Die Kopplung zwischen den Kolbenelementen der mindestens einen Kolben-Zylinder-Anordnung kann bspw. mechanisch, elektrisch, elektronisch und/oder durch ein Druckfluid erfolgen.

Auch ist es nach der Erfindung vorgesehen, daß der Antrieb der Kolbenelemente dazu ausgebildet ist, während der Gelierphase des Gießharzes den Nachdruck auf der jeweiligen Gießform aufrechtzuerhalten. Hierdurch erfüllt die mindestens eine Kolben-Zylinder-Anordnung eine Doppelfunktion, nämlich einmal die sonst von den Dosierpumpen erfüllte Dosierfunktion und zum anderen die Aufgabe eines Pufferelementes zum Aufrechterhalten des Nachdruckes auf der Gießform, wobei ein während der Gelierphase auftretender Materialschwund durch die Kolben-Zylinder-Anordnung bzw. Anordnungen ausgeglichen wird.

Auch kann die Mischkammer erfindungsgemäß als statischer oder dynamischer Mischer ausgebildet sein.

Nach der Erfindung ist es auch möglich, die Vorrichtung für die Befüllung mehrerer Gießformen auszubilden. Nach einer Ausgestaltung ist es dabei vorgesehen, daß in der von der Mischkammer zu den einzelnen Gießformen führenden Zuführungsleitung ein Pufferelement mit vorgeschaltetem Absperrelement, wie bspw. einem Rückschlag- oder einem Absperrventil, angeordnet ist.

Gemäß einer alternativen Ausführungsform der Erfindung ist es insbesondere für Gießmassen mit kurzer Topfzeit vorgesehen, daß jeder Gießform eine separate Mischkammer, vorzugsweise ein Statikmischer, mit nachgeschaltetem Pufferelement zugenordnet ist und in den Zuführleitungen für die Einzelkomponenten zu den Mischkammern Absperrelemente, wie bspw. Rückschlag- oder Absperrventile, angeordnet sind. Dadurch, daß die Einzelkomponenten bis nahe an die jeweilige Gießform herangeführt werden, wird das reaktive Gemisch in der jeweiligen Zuführleitung auf ein Minimum reduziert. Der Kolben der Pufferelemente kann mittels eines Druckmediums beaufschlagbar, aber auch federbelastet oder mechanisch verfahrbar sein.

Weitere Vorteile und Anwendungsmöglichkeiten der vorliegenden Erfindung ergeben sich aus der nachfolgenden Beschreibung der Ausführungsbeispiele anhand der Zeichnungen.

Es zeigen:
- Figur 1: eine schematische Ansicht einer möglichen Ausführungsform einer erfindungsgemäßen Vorrichtung mit einer einen Stufenkolben aufweisenden Kolben-Zylinder-Anordnung,
- Figur 2: eine weitere Ausführungsform einer erfindungsgemäßen Vorrichtung mit zwei separat angeordneten Kolben-Zylinder-Anordnungen,
- Figur 3: eine schematische Ansicht einer erfindungsgemäßen Vorrichtung, ähnlich wie Figur 2, jedoch zum Befüllen mehrerer Gießformen,
- Figur 4: eine Abwandlung der Ausführungsform gemäß Figur 3 mit jeder Gießform zugeordneten separaten Mischkammer,
- Figur 5: eine mögliche Ausführungsform einer Kolben-Zylinder-Anordnung und
- Figur 6: eine weitere Ausführungsform einer Kolben-Zylinder-Anordnung.

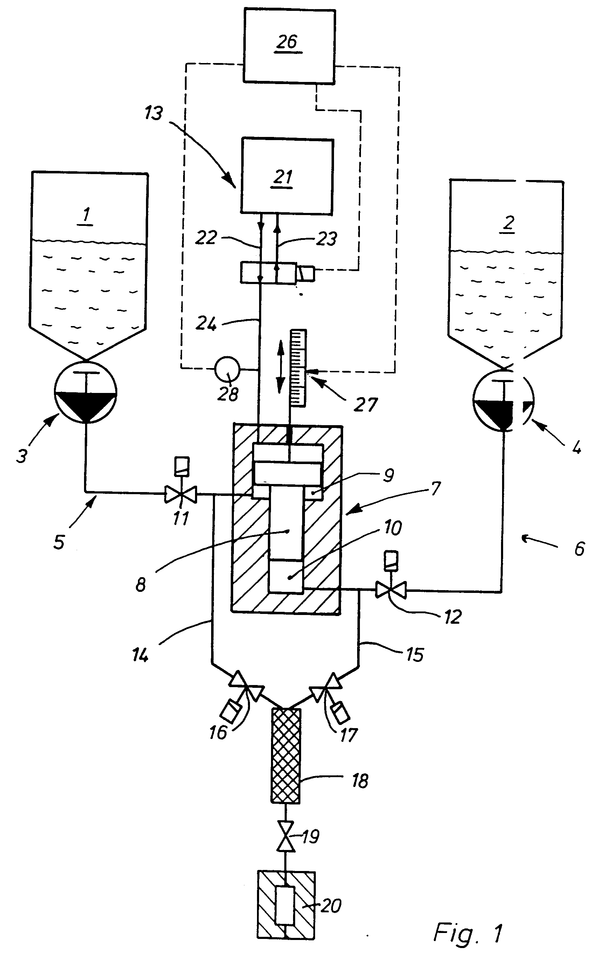

Die Vorrichtung gemäß Figur 1 weist zwei Vorratsbehälter 1, 2 für die Einzelkomponenten der Gießmasse auf, wobei jedem Vorratsbehälter 1, 2 eine Pumpeinrichtung 3, 4 zugeordnet ist. Von den Vorratsbehältern 1, 2 wird die jeweilige Einzelkomponente über Zuführungsleitungen 5, 6 einer Zweifach-Kolben-Zylinder-Anordnung 7 zugeführt. Die Kolben-Zylinder-Anordnung ist mit einem Stufenkolben 8 ausgebildet, welcher mit dem ihn umgebenden Zylindermantel zwei Dosierkammern 9, 10 bildet. Wie aus Figur 1 ersichtlich, gelangt die im Vorratsbehälter 1 bevorratete Einzelkomponente in die Dosierkammer 9, während die Einzelkomponente aus dem Vorratsbehälter 2 in die Dosierkammer 10 geladen wird. Während des Füllvorganges wird der Stufenkolben 8 in seine oberste Position geschoben. Anschließend werden die Ventile 11, 12 in den Zuführungsleitungen 5, 6 in Absperrstellung gebracht und der Antrieb 13 für die Zweifach-Kolben-Zylinder-Anordnung 7 eingeschaltet, so daß die Dosierkammern 9, 10 zumindest teilweise entleert werden. Dadurch gelangen die beiden Einzelkomponenten über Zuführungsleitungen 14, 15 bei in Durchflußstellung befindlichen Ventilen 16, 17 in eine Mischkammer 18 und von dort über eine mit einem Absperrventil versehene Gießmündung 19 in eine Gießform 20.

Der Antrieb 13 für die Zweifach-Kolben-Zylinder-Anordnung 7 ist bei dem hier gewählten Ausführungsbeispiel als Hydraulikaggregat 21 ausgebildet mit Versorgungsleitungen 22, 23, 24 und zwischengeschaltetem Servoventil 25.

Weiterhin weist der Antrieb eine Steuerung 26 auf mit Ingrementalgeber 27 und ggf. einem Drucksensor 28. Mittels der Steuerung 26 wird die Hubgeschwindigkeit des Stufenkolbens 8 und damit die Austrittsrate der Einzelkomponenten aus den Dosierkammern 9 und 10 gesteuert.

Gegenüber den Pumpeinrichtungen 3 und 4 ist die Kolben-Zylinder-Anordnung 7 für einen wesentlich höheren Arbeitsdruck ausgelegt. Dieser Förderdruck der Kolben-Zylinder-Anordnung 7 ist so bemessen, daß er dem sich durch das relativ kleine Volumen der Mischkammer 18 ergebenden Fließwiderstand gerecht wird. Die Pumpeinrichtungen 3 und 4 haben nur noch die Bedeutung der Förderung der Einzelkomponenten zu der Kolben-Zylinder-Anordnung 7. Auch die Dosierung der Einzelkomponenten erfolgt durch die Kolben-Zylinder-Anordnung 7. Hierdurch sind die Pumpeinrichtungen 3 und 4 wesentlich entlastet. Auch tritt der sonst sich ergebende Verschleiß infolge zu hoher Pumpkräfte in den Pumpeinrichtungen 3, 4, insbesondere bei abrasiven Gießmassen nicht auf.

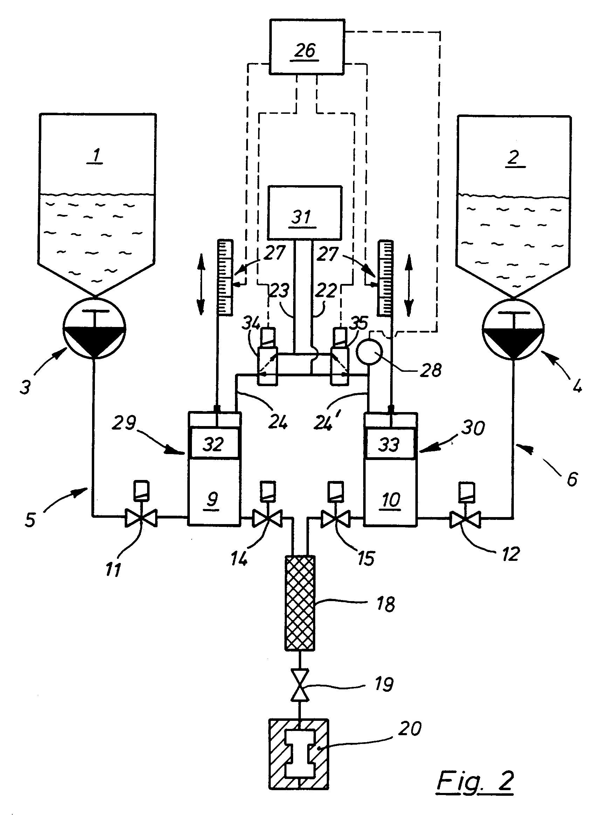

Bei der Vorrichtung gemäß Figur 2 sind diejenigen Funktionsteile, welche derjenigen gemäß Figur 1 entsprechen mit identischen Bezugszeichen versehen, so daß insoweit auf eine Beschreibung im einzelnen verzichtet werden kann. Der wesentliche Unterschied bei der Vorrichtung gemäß Figur 2 besteht darin, daß zwei separate Kolben-Zylinder-Anordnungen 29, 30 mit einem geänderten Antrieb 31 für die Kolbenelemente 32, 33 vorgesehen sind. Durch die Kopplung mit variabel vorwählbarem Kopplungsverhältnis der Kolbenelemente 32, 33 lassen sich unterschiedliche Rezepturen der Gießmasse fahren, ohne daß Umbauarbeiten an den Kolben-Zylinder-Anordnungen 29, 30 vorgenommen werden müssen. Der Antrieb 31 weist wiederum ein Hydraulikaggregat mit Versorgungsleitungen 22, 23, 24, 24' auf. Durch die Steuerung 26 werden die bei dem hier gewählten Ausführungsbeispiel als Servoventile 34, 35 ausgebildeten Ventile in Abhängigkeit der vom Ingrementalgeber 27, 27' abgegebenen Signale entsprechend geöffnet, so daß entsprechend dem vorgewählten Kopplungsverhältnis Druckfluid zu der einen bzw. anderen Kolben-Zylinder-Anordnung 29, 30 gefördert wird. Bspw. kann das Verhältnis der Druckfluidmengen zu der einen bzw. anderen Kolben-Zylinder-Anordnung 2:1 betragen. Dieses Verhältnis ist, wie oben ausgeführt, mittels der Steuerung 26 vorwählbar. Auch bei der Vorrichtung gemäß Figur 2 ist ein Drucksensor 28 vorgesehen, welcher steuerungstechnisch mit der Steuerung 26 verbunden ist und den aufrechtzuerhaltenen Nachpreßdruck auf der Gießform 20 während der Gelierphase überwacht bzw. über die Kolben-Zylinder-Anordnungen 29, 30 den erforderlichen Nachpreßdruck aufrechterhält.

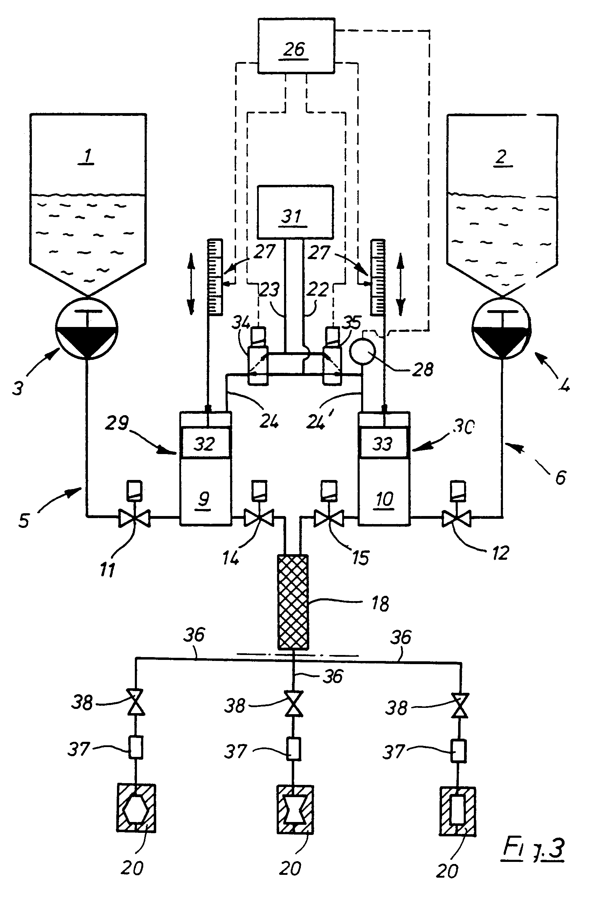

Die Ausführungsform gemäß Figur 3 entspricht bis zu der strichpunktiert dargestellten Linie schematisch derjenigen gemäß Figur 2. Anstelle von nur einer Gießform werden hier jedoch mehrere Gießformen 20 mit Gießmasse gefüllt. Hierdurch wird der konstruktive Aufwand durch die Komponentendosierung mittels der beiden Kolben-Zylinder-Anordnungen 29, 30 besonders vorteilhaft eingesetzt. Ausgehend von der Mischkammer 18 wird die Gießmasse über Zuführleitungen 36 zu drei Druckgießformen 20 geführt. Innerhalb der Verteilerleitungen 36 befindet sich jeweils ein Pufferelement 37 mit einem vorgeschalteten Absperrelement 38, bspw. einem Absperrventil. Durch die Pufferelemente 37 kann während der mit einem Schwund verbundenen Verfestigung des Gießmaterials in der Gießform 20 ein bestimmter Druck aufrechterhalten werden, wobei aus den Pufferelementen 37 Gießmasse in die zugenordnete Gießform 20 nachgefördert wird, um den Materialschwund auszugleichen. Durch die Anordnung der Absperrelemente 38 in die Zuführleitungen 36 können die Gießformen 20 unabhängig voneinander befüllt werden.

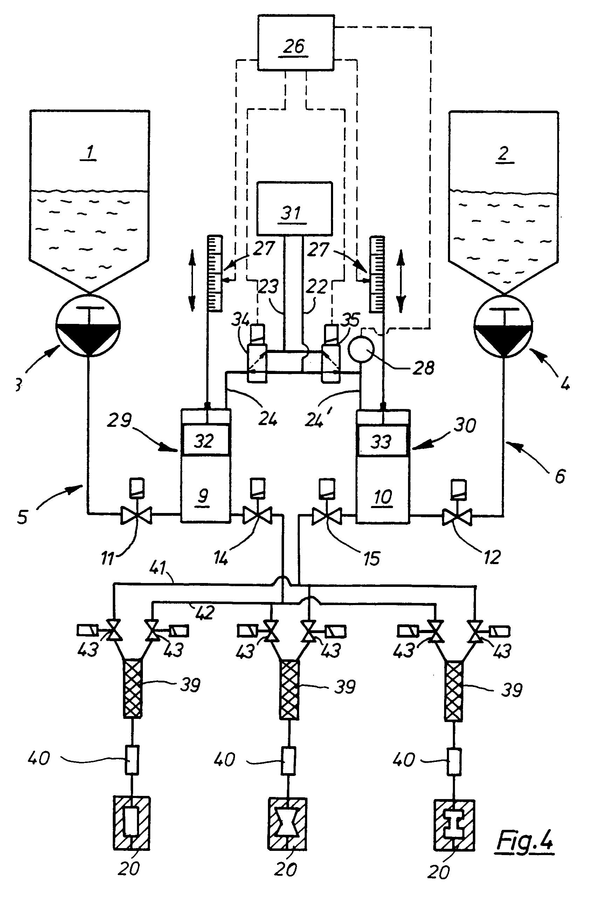

Bestimmte Gießmassen besitzen eine kurze Topfzeit, so daß das reaktive Massevolumen in den Zuführleitungen und Bauteilen reduziert werden muß, um Aushärtungen zu vermeiden. Hierfür ist bei der Ausführungsform gemäß Figur 4 jeder Gießform 20 eine separate Mischkammer, bspw. ein Statikmischer 39, zugeordnet. Die Einzelkomponenten der Gießmasse werden von den beiden Kolben-Zylinder-Anordnungen 29, 30 über parallele Zuführleitungen 41, 42 jeweils einem der Gießform 20 vorgeschalteten Statikmischer 39 zugeführt. In den Zuführleitungen zwischen Statikmischer 39 und Gießform 20 befindet sich wiederum jeweils ein Pufferelement 40, um die Gießmasse in der Gießform 20 während der Verfestigungsphase unter Druck zu halten und den dabei auftretenden Materialschwund durch Nachfördern von Gießmasse auszugleichen. Um auch hier ein Füllen der Gießformen 20 unabhängig voneinander zu ermöglichen, ist in den Zuführleitungen 41, 42 jeweils vor der Mischkammer 39 ein Absperrelement 43, bspw. ein Absperrventil, angeordnet.

Die Pufferelemente 37, 40 gemäß den Figuren 3 und 4 können, müssen aber nicht notwendigerweise Steuerkontakte zur Steuerung des Gießablaufes aufweisen. Denkbar ist bspw. ein Puffer ohne Steuerkontakte, welcher nahe der Gießformen angeordnet ist und dessen Kolben elastisch ausweicht oder dessen Speichervolumen sich elastisch vergrößert, wenn der Druck in der Gießmasse ansteigt. Dabei kann das Pufferelement elastisch ausgeführt, bspw. als Schlauch oder Membran, oder federbelastet oder mittels eines Druckmediums beaufschlagbar sein. Mit zunehmendem Speichervolumen im Puffer steigt dann der Druck an. Bei gefüllter Gießform staut die Gießmasse zurück und das Pufferelement füllt sich. Wird nun bspw. nach Einfüllen einer festgelegten Hauptmenge in die Gießform der Puffer auf Haltedruckfahrweise umgeschaltet, dann läßt sich der Puffer mit dem Haltedruck aufladen und kann nach einer vorher ermittelten Ausgleichszeit als gefüllt im Hinblick auf die erforderliche Nachdruckmenge an Gießmasse während der Verfestigungszeit betrachtet werden. Sodann kann bspw. eine weitere Gießform entsprechend der DE-A-27 48 982 gefüllt werden, indem der Gießweg zu der ersten Gießform 20 durch das Absperrventil 38 in der jeweiligen Zuführleitung gemäß Figur 3 bzw. durch die in den Zuführleitungen 41, 42 angeordneten Absperrventile 43 bei der Vorrichtung gemäß Figur 4 zur Materialquelle hin abgesperrt werden.

Eine andere Betriebsweise läßt sich dadurch erreichen, daß die Pufferelemente 37, 40 und die Gießform 20 durch die Vorgabemenge der beiden Dosierelemente bzw. Kolben-Zylinder-Anordnungen 29, 30 auf Haltedruckvolumen aufgeladen werden, sofern man zuvor diese Vorgabemenge empirisch ermittelt hat. Auch hierbei erfolgt eine Abschaltung bzw. ein Absperren der Ventile 38, 43 bei Erreichen der von den Dosierelementen 29, 30 zugeführten Sollmenge.

Eine weitere Möglichkeit der Ausgestaltung des Pufferelementes besteht darin, durch ein zu- und wegschaltbares Druckmittel das Puffervolumen für die Druckhaltung zu speichern. Ein solches Pufferelement kann je nach Ausführung bei der Formfüllung leer oder voll sein. Ist das Pufferelement während der Formfüllung voll, wird zur Druckhaltung das Druckmittel zugeschaltet, indem bspw. ein Kontakt für das Druckmittel oder ein Kontakt für den Zeitpunkt des Beginns der Druckhaltung betätigt wird. Ist dagegen das Pufferelement während der Formfüllung leer, um bspw. im Hinblick auf eine geringe Topfzeit ein Minimum an Gießmasse im Pufferelement verweilen zu lassen, dann muß das Pufferelement am Ende des Füllvorganges gefüllt werden. In diesem Falle wird das Druckmittel zum Bewegen des Kolbens bzw. Verändern des Speichervolumens des Pufferelementes weggeschaltet und später wieder zugeschaltet. Auch dies kann wieder durch einen Kontakt für das Druckmittel oder einen Zeitkontakt für die Druckmittelzuschaltung erfolgen.

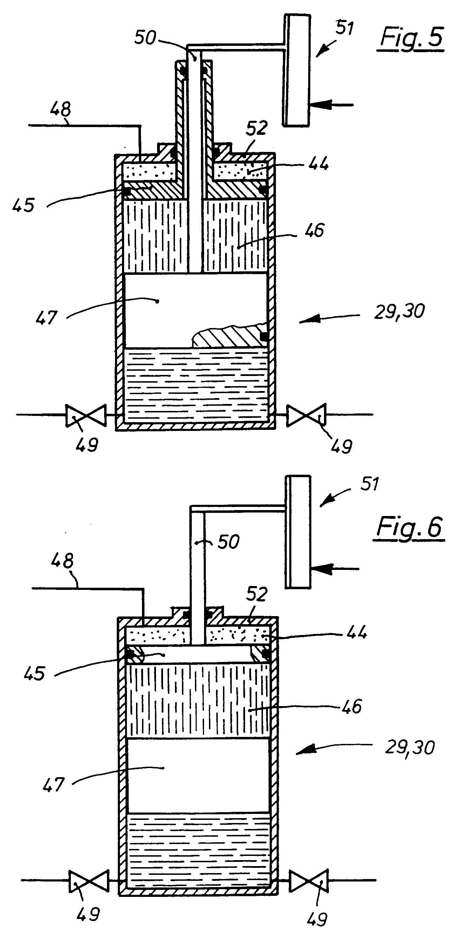

Grundsätzlich können die Kolben-Zylinder-Anordnungen mit einem Antriebsfluid betrieben werden, welches mit der jeweiligen Einzelkomponente der Gießmasse verträglich ist. Mitunter weist eine solche Antriebsflüssigkeit jedoch eine zu hohe Viskosität für die Regeleinrichtungen der Kolben-Zylinder-Anordnungen auf. Für diese Anwendungsfälle ist es gemäß Figuren 5 und 6 vorgesehen, daß die entsprechende Kolben-Zylinder-Anordnung, wie bspw. diejenigen gemäß Figuren 2 bis 4 eine mittels Druckfluid 44, insbesondere mittels Hydraulikflüssigkeit, beaufschlagbaren Antriebskolben 45 aufweisen, welcher über ein Zwischenfluid 46 auf einen Förderkolben 47 einwirkt, der wiederum die jeweilige Einzelkomponente weiterfördert, bspw. zur Mischkammer 18 oder den separaten Mischkammern 39 gemäß Figur 4. Das zwischen dem Antriebskolben 45 und dem Förderkolben 47 eingelagerte Zwischenfluid ist so ausgewählt, daß es mit der jeweiligen Einzelkomponente verträglich ist. Durch den geometrischen Abstand zwischen Antriebsflüssigkeit 44 und Einzelkomponenten ist in jedem Fall sichergestellt, daß die Antriebsflüssigkeit 44 nicht mit der Einzelkomponente in Berührung kommt und umgekehrt, so daß die einzelnen Komponenten des Antriebssystemes nicht durch die Einzelkomponentengießmassen verunreinigt werden.

Die Zuführung des Druckfluids 44 erfolgt über die Zuführungsleitung 48. Der Ein- und Auslaß der Kolben-Zylinder-Anordnung 29, 30 ist mittels Absperrelementen 49 öffnen- und schließbar.

Der Unterschied der Ausführungsformen gemäß Figuren 5 und 6 besteht in der Feststellung des jeweiligen Speichervolumens an Einzelkomponente innerhalb der Kolben-Zylinder-Anordnung 29, 30. Bei der Ausführungsform gemäß Figur 5 erfolgt die Detektierung des Speichervolumens dadurch, daß der Förderkolben 47 eine sich durch den Antriebskolben 45 und durch den Zylinderdeckel 52 der Kolben-Zylinder-Anordnung 29, 30 erstreckende Kolbenstange 50 aufweist, so daß durch die Bewegung der Kolbenstange 50 über einen Ingrementalgeber 51 der jeweilige Füllgrad ermittelt werden kann. Zusätzlich kann bei dieser Ausführungsform ein etwaiger Schwund an Zwischenfluid 46 durch die dann hohl ausgeführte Kolbenstange 50 ausgeglichen werden. Dagegen erfolgt die Detektierung der Speichermenge an Einzelkomponente bei der Ausführungsform gemäß Figur 6 indirekt über die Stellung des Antriebskolbens 45, wobei auch hier die Bewegeung der durch den Zylinderdeckel 52 geführten Kolbenstange 50 als Stellgröße für den Ingrementalgeber 51 dient.

## Patentansprüche

1. Vorrichtung, insbesondere Druckgelievorrichtung, zum Befüllen einer oder mehrerer Gießformen (20) mit gießfähig flüssigen Stoffen, deren Einkelkomponenten mittels Pumpeinrichtungen (3, 4) über absperrbare Leitungen (5, 6) mit einem ersten Förderdruck wenigstens einer Kolben-Zylinder-Anordnung (7, 29, 30) zugeführt werden, von welcher die Einzelkomponenten einer Mischkammer (18, 39) und von dort zu der jeweiligen Gießform (20) geleitet werden, und die wenigstens eine Kolben-Zylinder-Anordnung (7, 29, 30) zur Erzeugung eines zweiten Förderdrucks ausgebildet ist, der größer als der erste Förderdruck ist, wobei eine Förder-Kolben (8, 32, 33, 47) den Zylinder der Kolben-Zylinder-Anordnung (7, 29, 30) in wenigstens einen Pumpraum (9,10) für die gießfähig flüssigen Stoffe und in einen mit Antriebsflüssigkeit in Stromungsverbindung stehenden Arbeitsraum unterteilt, dadurch gekennzeichnet, daß zweichen jedem Pumpraum (9,10) und dem Arbeitsraum bzw. einem an den wenigstens einen Pumpraum (9,10) angrenzenden Raum für ein Zwichenfluid (46) eine einzelne Abdichtung zwischen Förder-Kolben (8, 32, 33, 47) und Zylinder der Kolben-Zylinder-Anordnung (29, 30) vorgesehen ist und die Wirkflächen des Förder-Kolbens (8, 32, 33, 47), welche in Kontakt mit den gießfähig flüssigen Stoffen und dem Druckfluid (44) oder dem Zwischenfluid (46) gelangen, im wesentlichen gleich groß sind.

2. Vorrichtung nach Anspruch 1, dadurch gekennzeichnet, daß die wenigstens eine Kolben-Zylinder-Anordnung (7) mindestens zwei Dosierkammern (9, 10) für die Einzelkomponenten der Gießmasse aufweist.

3. Vorrichtung nach Anspruch 1, dadurch gekennzeichnet, daß wenigstens zwei Kolben-Zylinder-Anordnungen (29, 30) für die Einzelkomponenten vorgesehen sind.

4. Vorrichtung nach einem der Ansprüche 1 bis 3, dadurch gekennzeichnet, daß die mindestens eine Kolben-Zylinder-Anordnung (7; 29, 30) einen durch Druckfluid (44), insbesondere Hydraulikflüssigkeit, beaufschlagbaren Antriebskolben (45) sowie einen durch den Antriebskolben (45) über ein gasförmiges und/oder flüssiges Zwischenfluid (46) antreibbaren Förderkolben (47) für die jeweilige Einzelkomponentenmasse bzw. die Gießmasse aufweist, wobei das Zwischenfluid (46) mit der jeweiligen Komponente verträglich ist.

5. Vorrichtung nach Anspruch 4, dadurch gekennzeichnet, daß der Förderkolben (47) eine sich durch den Antriebskolben (45) und durch den Zylinderdeckel (52) oder der Antriebskolben (45) eine sich durch den Zylinderdeckel (52) erstreckende Kolbenstange (50) zur Ermittlung des Speicherinhaltes an Komponentenmasse in der jeweiligen Kolben-Zylinder-Anordnung (29,30) aufweist.

6. Vorrichtung nach einem der Ansprüche 1 bis 5, dadurch gekennzeichnet, daß die Bewegung der Kolbenelemente (8; 32, 33) der wenigstens einen Kolben-Zylinder-Anordnung (7; 29, 30) starr oder variabel mit vorwählbarem Kopplungsverhältnis miteinander gekoppelt sind.

7. Vorrichtung nach einem der Ansprüche 1 bis 6, dadurch gekennzeichnet, daß die Kopplung zwischen den Kolbenelementen (8; 32, 33) der Kolben-Zylinder-Anordnungen (7; 29, 30) mechanisch, elektrisch, elektronisch und/oder mittels eines Druckfluides erfolgt.

8. Vorrichtung nach einem der Ansprüche 1 bis 7, dadurch gekennzeichnet, daß der Antrieb (31) für die Kolbenelemente (32, 33) der Kolben-Zylinder-Anordnungen (29, 30) dazu ausgebildet ist, während der Gelierphase des Gießharzes den Nachdruck auf der jeweiligen Gießform (20) aufrechtzuerhalten.

9. Vorrichtung nach einem der Ansprüche 1 bis 8, dadurch gekennzeichnet, daß der Antrieb für die Kolbenelemente (32, 33) der Kolben-Zylinder-Anordnungen (29, 30) für ein veränderbares Antriebsverhältnis der Kolbenelemente (32, 33) untereinander bzw. für ein veränderbares Mischverhältnis der Einzelkomponenten ausgebildet ist.

10. Vorrichtung nach einem der Ansprüche 1 bis 9, dadurch gekennzeichnet, daß in der Zuführleitung (36) zu jeder Gießform (20) ein Pufferelement (37) mit vorgeschaltetem Absperrelement, wie bspw. ein Rückschlag- oder ein Absperrventil, angeordnet ist.

11. Vorrichtung nach einem der Ansprüche 1 bis 10, dadurch gekennzeichnet, daß jeder Gießform (20) eine separate Mischkammer (39), vorzugsweise ein Statikmischer, mit nachgeschaltetem Pufferelement (40) und in den Zuführleitungen (41, 42) für die Einzelkomponenten zu den Mischkammern (39) Absperrelemente (43), wie bspw. Rückschlag- oder Absperrventile, angeordnet sind.

12. Vorrichtung nach Anspruch 10 oder 11, dadurch gekennzeichnet, daß der Kolben der Pufferelemente (37 bzw. 40) federbelastet, mittels eines Druckfluids beaufschlagbar oder mechanisch verfahrbar ist.

## Claims

1. Device, in particular pressure gelling device, for the filling of one or more casting moulds (20) with pourable liquid substances, the individual components of which are fed by way of ducts (5, 6), which can be shut off, at a first conveying pressure by means of pump equipments (3, 4) to at least one piston-cylinder arrangement (7; 29, 30), from which the individual components are conducted to a mixing chamber (18; 39) and from there to the respective casting mould (20) and the at least one piston-cylinder arrangement (7; 29, 30) is constructed for the production of a second conveying pressure, which is greater than the first conveying pressure, wherein a conveying piston (8, 32, 33, 47) subdivides the cylinder of the piston-cylinder arrangement (7; 29, 30) into at least one pump chamber (9, 10) for the pourable liquid substances and into a working chamber standing in flow connection with working fluid, characterised in that between each pump chamber (9, 10) and either the working chamber or a chamber adjoining the at least one pump chamber (9, 10), there is provided a single seal for an intermediate fluid (46) between the conveying piston (8, 32, 33, 47) and the cylinder of the piston-cylinder arrangement (29, 30) and the operation surfaces of the conveying piston (8, 32, 33, 47), which get into contact with the pourable liquid substances and the pressure fluid or the intermediate fluid (46), are of substantially the same size.

2. Device according to claim 1, characterised in that the at least one piston-cylinder arrangement (7) comprises at least two metering chambers (9, 10) for the individual components of the casting mass.

3. Device according to claim 1, characterised in that at least two piston-cylinder arrangements (29, 30) are provided for the individual components.

4. Device according to one of claims 1 to 3, characterised in that the at least one piston-cylinder arrangement (7; 29, 30) comprises a drive piston (45), which is loadable by pressure fluid (44), in particular hydraulic liquid, as well as a conveying piston (47), which is drivable by the drive piston (45) by way of a gaseous and/or liquid intermediate fluid (46), for the respective individual component mass or the casting mass, wherein the intermediate fluid (46) is compatible with the respective components.

5. Device according to claim 4, characterised in that the conveying piston (47) comprises a piston rod (50), which extends through the drive piston (45) and through the cylinder head (52), or the drive piston (45) comprises a piston rod (50), which extends through the cylinder head (52), for ascertaining the storage content of component mass in the respective piston-cylinder arrangement (29, 30).

6. Device according to one of claims 1 to 5, characterised in that the movements of the piston elements (8; 32, 33) of the at least one piston-cylinder arrangement (7; 29, 30) are coupled together either rigidly or variably with preselectable coupling ratio.

7. Device according to one of claims 1 to 6, characterised in that the coupling between the piston elements (8; 32, 33) of the piston-cylinder arrangements (7; 29, 30) takes place mechanically, electrically, electronically and/or by means of a pressure fluid.

8. Device according to one of claims 1 to 7, characterised in that the drive (31) for the piston elements (32, 33) of the piston-cylinder arrangements (29, 30) is constructed for maintaining the replenishing pressure on the respective casting mould (20) during the gelling phase of the casting resin.

9. Device according to one of claims 1 to 8, characterised in that the drive for the piston elements (32, 33) of the piston-cylinder arrangements (29, 30) is constructed for either a variable drive ratio of the piston elements (32, 33) one among the other or a variable mixture ratio of the individual components.

10. Device according to one of claims 1 to 9, characterised in that a buffer element (37) with upstream shut-off element, such as for example a non-return valve or a shut-off valve, is arranged in the feed duct (36) to each casting mould (20).

11. Device according to one of claims 1 to 10, characterised in that each casting mould (20) is associated with a separate mixing chamber (39), preferably a static mixer, with downstream buffer element (40) and shut-off elements (43), such as for example non-return valves or shut-off valves, are arranged in the feed ducts (41, 42) for the individual components to the mixing chambers (39).

12. Device according to claim 10 or 11, characterised in that the piston of the buffer elements (37 or 40) is spring-loaded, loadable by means of a pressure fluid or movable mechanically.

## Revendications

1. Dispositif, notamment dispositif de gélification sous pression, pour remplir un ou plusieurs moules de coulée (20) avec les substances liquides aptes à la coulée, dont les constituants individuels sont amenés au moyen de dispositifs (3, 4) formant pompes, par l'intermédiaire de canalisations (5,6) pouvant être bloquées, à l'aide d'au moins une première pression de refoulement d'au moins un dispositif à piston et cylindre (7,29,30), et parmi lesquels les Constituants individuels sont envoyés à une chambre de mélange (18,39) et, à partir de là, au moule de coulée respectif (20), et dans lequel le au moins un dispositif à piston à cylindre (7,29,30) est agencé de manière à produire une seconde pression de refoulement qui est supérieure à la première pression de refoulement, et dans lequel un piston de refoulement (8,32,33,47) divise le cylindre du dispositif à piston et cylindre (7,29,30) en au moins une chambre de pompage (9,10) pour les substances liquides aptes à la coulée et en une chambre de travail placée en liaison fluidique avec un liquide d'entraînement, caractérisé en ce qu'entre la chambre de pompage (9,10) et la chambre de travail ou une chambre, jouxtant la au moins une chambre de pompage (9,10) et étant prévue pour un fluide intercalaire (46), il est prévu un dispositif individuel d'étanchéité entre le piston de refoulement (8,32,33,47) et le cylindre du dispositif à piston et cylindre (29,30), les surfaces actives du piston de refoulement (8,32,33,47), qui sont en contact avec les substances liquides aptes à s'écouler et le fluide sous pression (44) ou le fluide intercalaire (46), étant essentiellement identiques.

2. Dispositif selon la revendication 1, caractérisé en ce que le au moins un dispositif à piston et cylindre (7) comporte au moins deux chambres de dosage (9,10) pour les constituants individuels de la masse de coulée.

3. Dispositif selon la revendication 1, caractérisé en ce qu'au moins deux dispositifs à piston et cylindre (29,30) sont prévus pour les constituants individuels.

4. Dispositif selon l'une des revendications 1 à 3, caractérisé en ce que le au moins un dispositif à piston et cylindre (7,29,30) comporte un piston d'entraînement (45), qui peut être chargé par le fluide sous pression (44), notamment un liquide hydraulique, ainsi qu'un piston de refoulement (47), qui peut être entraîné par le piston d'entraînement (45) par l'intermédiaire d'un fluide intercalaire gazeux et/ou liquide (46), pour la masse respective des constituants individuels ou la masse de coulée, le fluide intercalaire (46) étant compatible avec les constituants respectifs.

5. Dispositif selon la revendication 4, caractérisé en ce que, pour déterminer le contenu stocké de masse de constituant dans le dispositif à piston et cylindre respectif (29,30), le piston de refoulement (47) possède une tige de piston (50) qui s'étend à travers le piston d'entraînement (45) et à travers le couvercle (52) du cylindre ou le piston d'entraînement (45) possède une tige de piston (50) qui traverse le couvercle de cylindre (52).

6. Dispositif selon l'une des revendications 1 à 5, caractérisé en ce que les déplacements des éléments de piston du au moins un dispositif à piston et cylindre (7;29,30) sont couplés entre eux d'une manière rigide ou variable avec un rapport de couplage pouvant être présélectionné.

7. Dispositif selon l'une des revendications 1 à 6, caractérisé en ce que le couplage entre les éléments de piston (8;32,33) des dispositifs à piston et cylindre (7;29,30) s'effectue mécaniquement, électriquement, électroniquement et/ou à l'aide d'un fluide sous pression.

8. Dispositif selon l'une des revendications 1 à 7, caractérisé en ce que le dispositif d'entraînement (31) pour les éléments de piston (32,33) des dispositifs à piston et cylindre (29,30) est agencé de manière à maintenir la pression de maintien au moule de coulée respectif (20) pendant la phase de gélification de la résine de coulée.

9. Dispositif selon l'une des revendications 1 à 8, caractérisé en ce que le dispositif d'entraînement pour les éléments de piston (32,33) des dispositifs à piston et cylindre (29,30) est conçu pour l'obtention d'un rapport modifiable d'entraînement des éléments de piston (32,33) entre eux ou pour un rapport variable de mélange des constituants individuels.

10. Dispositif selon l'une des revendications 1 à 9, caractérisé en ce que dans la canalisation d'amenée (36) aboutissant à chaque moule de coulée (20) est disposé un élément tampon (37) en amont duquel est branché un élément de blocage, comme par exemple une soupape anti-retour ou une vanne de sectionnement.

11. Dispositif selon l'une des revendications 1 à 10, caractérisé en ce que chaque moule de coulée (20) comporte une chambre de mélange séparée (39), de préférence un mélangeur statique, en aval de laquelle est branché un élément tampon (40), et que des éléments de blocage (43), comme par exemple des soupapes anti-retour et des vannes de sectionnement, sont disposés dans les canalisations (41,42) d'amenée des constituants individuels aux chambres de mélange (39).

12. Dispositif selon la revendication 10 ou 11, caractérisé en ce que le piston des éléments tampons (37 ou 40) est chargé par un ressort, peut être chargé au moyen d'un fluide sous pression ou est déplaçable mécaniquement.
